# DEMANDE DE BREVET EUROPEEN

(11) **EP 0 828 150 A1**
(43) Date de publication de la demande: **11.03.1998**
(21) Numéro de dépôt: 97430016.2
(22) Date de dépôt: 24.06.1997
(51) Int. Cl.: G01M 3/16

(54) **Détecteur d'infiltration électro-magnétique et acoustique**

(30) Priorité: 25.06.1996 FR 9607973
(71) Demandeur: Duloung, Jean-Luc, 34080 Montpellier (FR)
(72) Inventeur: Duloung, Jean-Luc, 34080 Montpellier (FR)

(57) **Abrégé**

L'invention concerne une mise en oeuvre et un dispositif permet tant de détecter sans risque une infiltration sur revètement d'étanchéité .

Il est constitué d'un boitier de commande (I) relié au secteur (2), un générateur (3) électrique transmet un courant continu à l'anode (+) (4) régulé par un volt-mètre (5) et un ampère-mètre (6) ,une électrode (7) relie le boitier de commande (I) à la surface mouillée (8) ; la cathode (9) est reliée à la terre (I0) comprend un testeur de terre (T) . un support (II) fixe le boitier (I) . au droit de l'infiltration (I2) le contact (I3) de la liaison spécialisée de mise à la terre (I4) relie le support (I2), le pied télescopique (I5) l'y maintient . Sur la surface mouillée (8) l'opérateur actionne les détecteurs ( DI )-( D2 ) reliés au boitier de réception (I6) , à l'approche de l'infiltration, le flux traversant la surface (8) fait réagir le galvanomètre (I7) , le timbre (I8) , l'amplificateur (I9) croit le son propagé aux écouteurs (20)

La mise en oeuvre et le dispositif selon l'invention est particulièrement destiné à la détection des infiltrations sur revètement d'étanchéité .

## Description

La présente invention concerne une mise en oeuvre et un dispositif électro magnétique et acoustique de détection d'infiltration en particulier pour toiture terrasse et permettre de résoudre les difficultés dues aux recherches d'infiltrations.

LA détection et la localisation d'infiltration est faite traditionnellement par la pose de batardeau aux alentours de la zone jugée défectueuse,dans l'attente d'un mouillage du plafond,ou, la recherche est realisée au jugé. Ces solutions,sont techniquement aléatoires. S'il y à plusieurs infiltrations,elles ne pourront être descéllées que coup par coup, dans un temps plus ou moins long. Cette difficulté à été solutionnée selon l'invention par une mise en oeuvre et un dispositif de détection et de localisation d'infiltration électro magnétique et acoustique. Car, au point actuel de la technique, il faut, que la partie inférieure ( plafond ) soit mouillée( C.A.D.) que l'infiltration soit visible pour se prononcer.

La mise en oeuvre et le dispositif selon l'invention, permet de remédier à cet inconvénient de détection et de localisation d'-infiltration, qu'il y ait mouillage ou non de la partie inférieure ( plafond ).

Ainsi, par une mise en oeuvre et un dispositif électro magnétique et acoustique, selon l'invention,il n'y a plus besoin d'attendre que la partie inférieure ( plafond ) soit mouillée L'exécution d'une telle recherche peut être éffectuée dans une pério de de beau temps stable, ex:( immeuble à usage saisonnier ).les infiltrations sont constatées lors de l'occupation du logement. Donc, il n'y a plus besoin d'attendre de nouvelles pluies. Cette solution a l'avantage concidérable d'éviter un nouveau dégats DES EAUX. En effet , une construction recevant une térrasse, est réalisée de différents matériaux ( béton armé, ossature métallique, etc.) Cette construction, est encrée dans le sol, sur des fondations en béton armé. Le sol constituant ainsi la terre,(Pole -) du batiment ( cathode ). la partie supérieure de la construction, est recouverte avec des menbranes à strutures imperméables et isolantes.

La présente invention concerne une mise en oeuvre et un dispositif comprenant: Un boitier de commande relié au secteur, qui, aprés transformation ,alimente l'anode +, un cordon formant l'-électrode est relié à la terrasse.La zone à observer est préalablement humidifiée, perméttant le passage de l'eau dans la zone défecteuse, (sans provoquer une nouvelle infiltration , ou , un "dégats des eaux"). La construction du bâtiment , constituant la (cathode -),est en relation avec la partie humide de la terrasse (anode +) créant ainsi un entonnoir électro magnétique imaginaire, ou , la terrasse correspondrait à la partie supérieure évasée de l'entonnoir et,ou l'infiltration correspondrait à la partie inférieure tubulaire de l'entonnoir; C.A.D., que la partie évasée recevrait un champ electro magnétique faible, et que la partie tubulaire recevrait un champ electro magnétique très intense. Rappelant l'effet d'un cailloux jeté dans l'eau. Le flux transmis par l'electrode (+) est alors détecté par des détecteurs reliés à un récepteur electro acoustique, mesurant le champ electro magnétique sur la terrasse. Ce champ est d'autant plus grand que l'on se rapproche de l'infiltration et, d'autant plus petit que l'on s'en éloigne. Ainsi, lorsque le champ va vers son amplitude maximum , les appareils de mesures visuels et acoustiques , nous conduisent vers l'infiltration . Des Lors, lorsque l'infiltration est découverte , une boucle est réalisée à la périphérie de l'infiltration reliée à l'électrode . Cette boucle permet de créer un nouveau champ électro-magnétique à l' intérieur de cette boucle , dans le champ électro-magnétique primitif . Ce nouveau champ, isole l'infiltration du champ électro-magnétique primitif . Le circuit est dit " ouvert "(il n'y a plus d'infiltration). Dans le cas contraire, le champ électro magnétique est dit " fermé " il y a une autre infiltration.

L'invention est décrite ci-aprés a l'aide d'exemples non limita tifs et de références au dessins joints , dans lesquels :

La figure I vue de dessus est un exemple de réalisation du boitier de commande I conformément à l'invention.

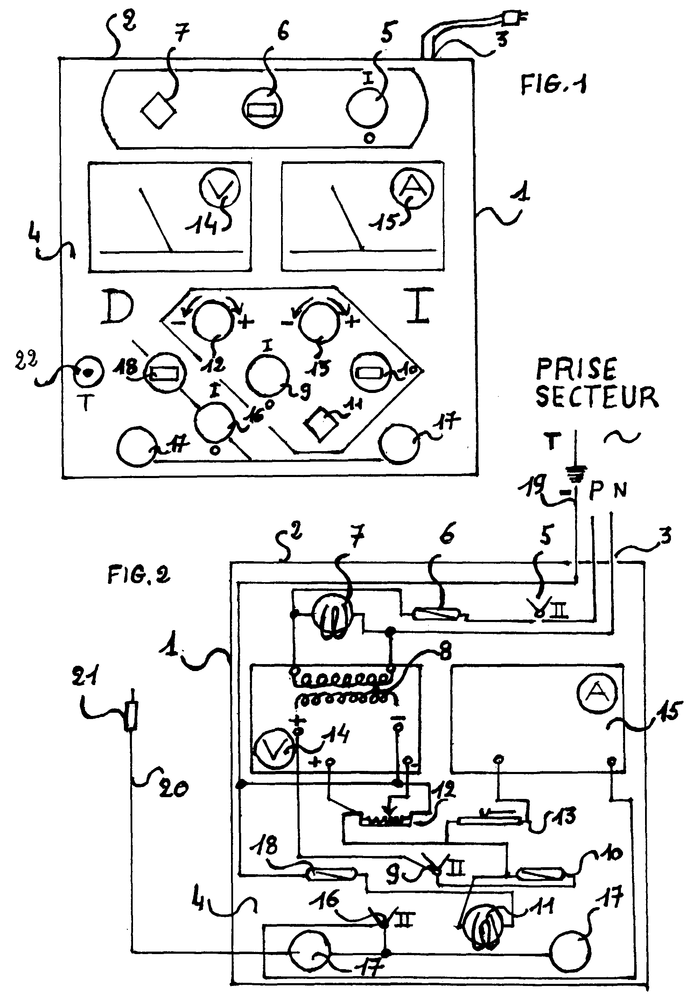

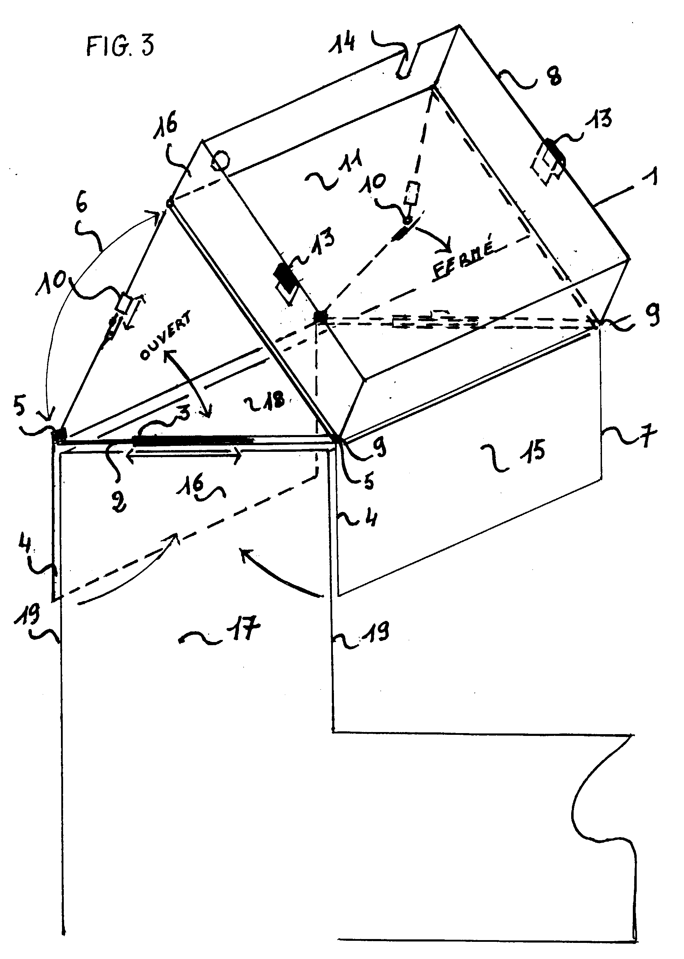

La figure 2 représente un schéma fonctionnel du dispositif conformément à l' invention .

La figure 3 représente un exemple de réalisation du support du boitier de commande conformément à l'invention .

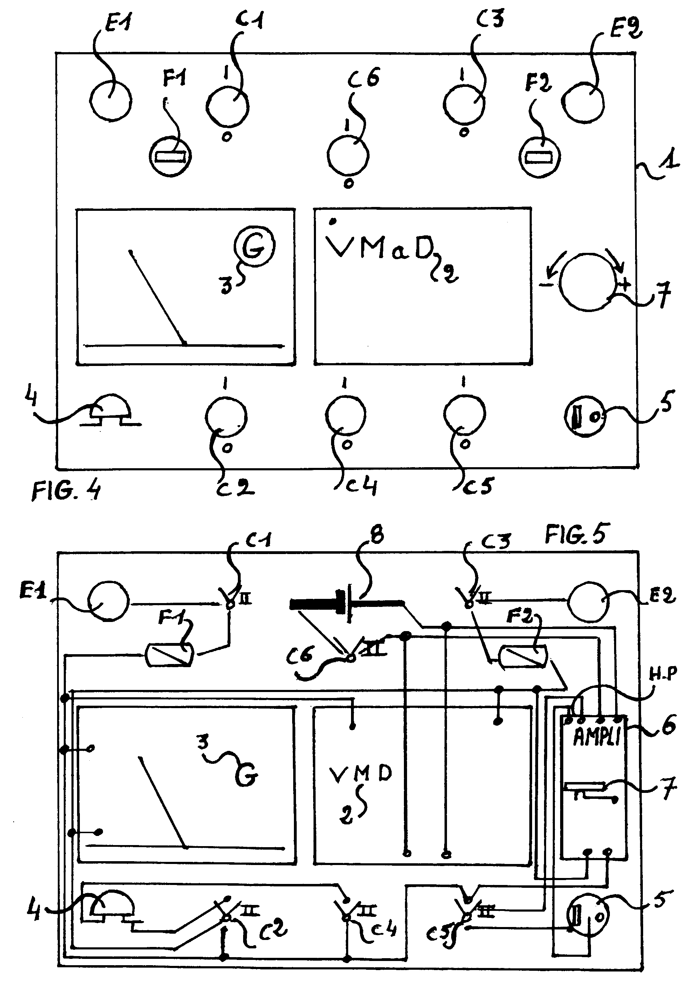

La figure 4 est un exemple de réalisation du boitier de détection électro-acoustique conformément à l'invention .

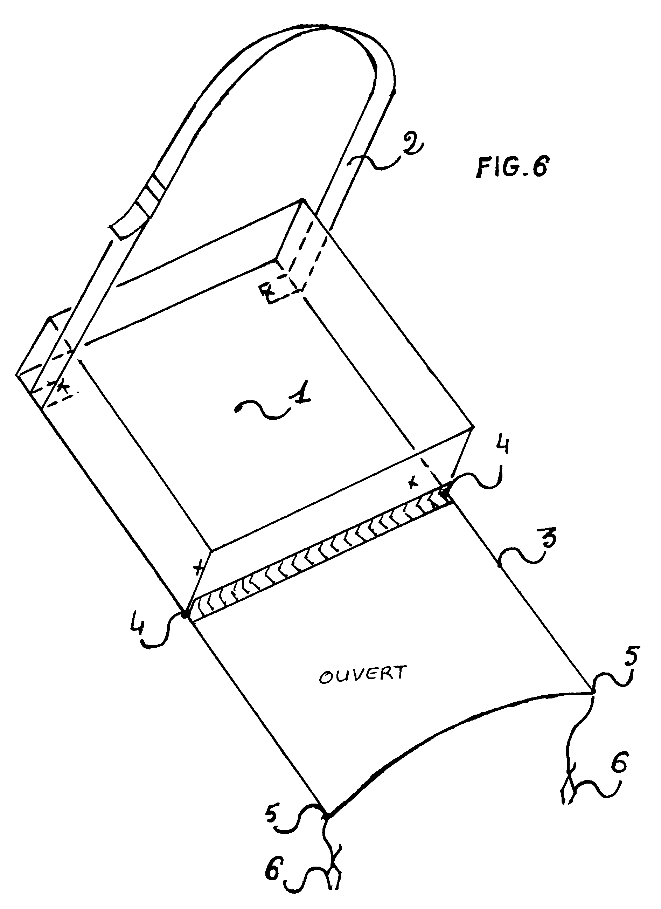

La figure 5 représente un schéma fonctionnel du dispositif conformément à l'invention .

La figure 6 représente un exemple de réalisation du support du boitier de réception électro acoustique conformément à l'invention .

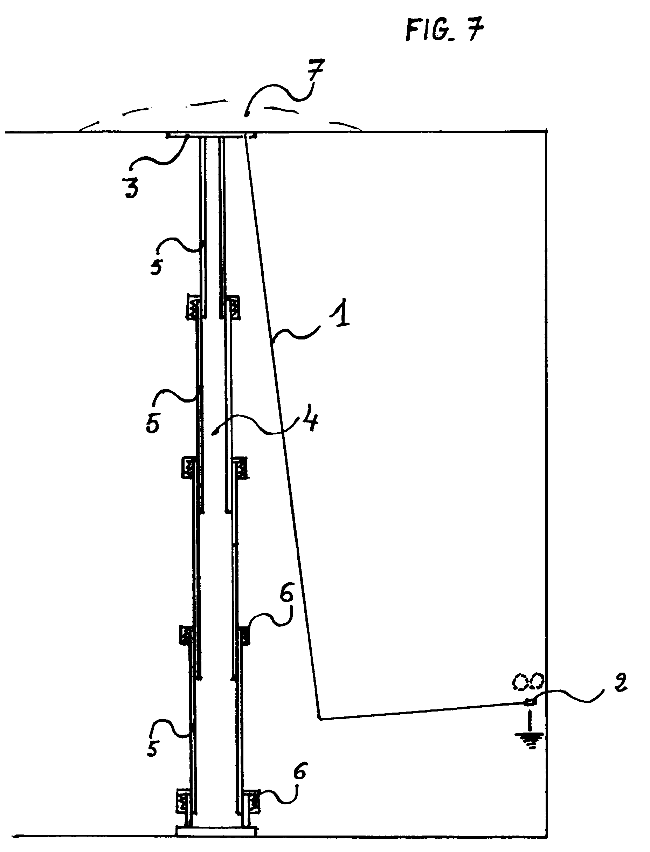

La figure 7 est une vue en coupe d'un exemple de réalisation du dispositif spécialisé de mise à la terre conformément à l'invention .

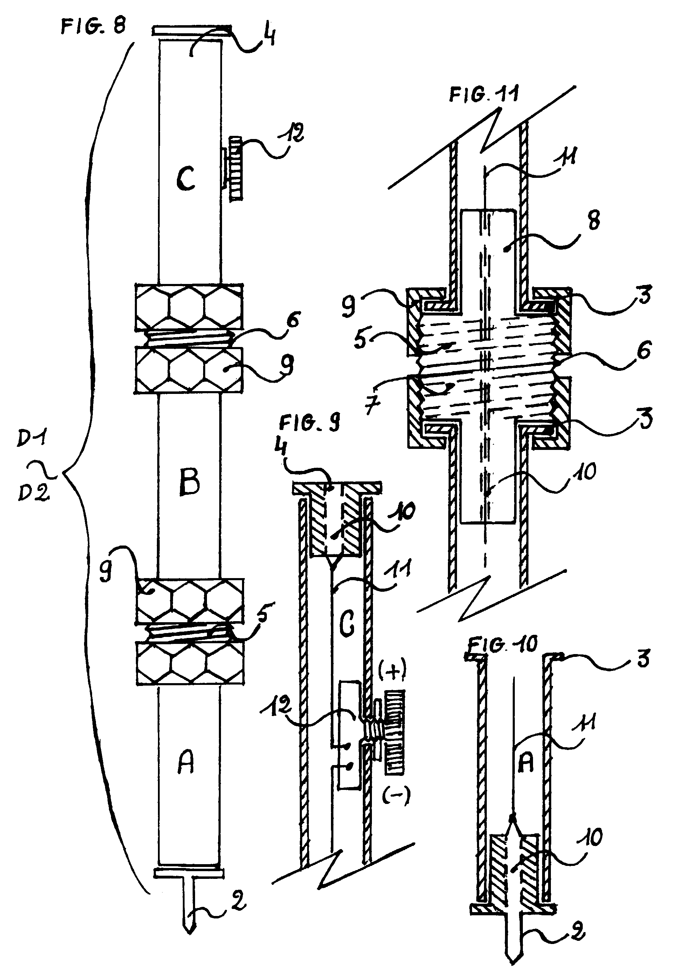

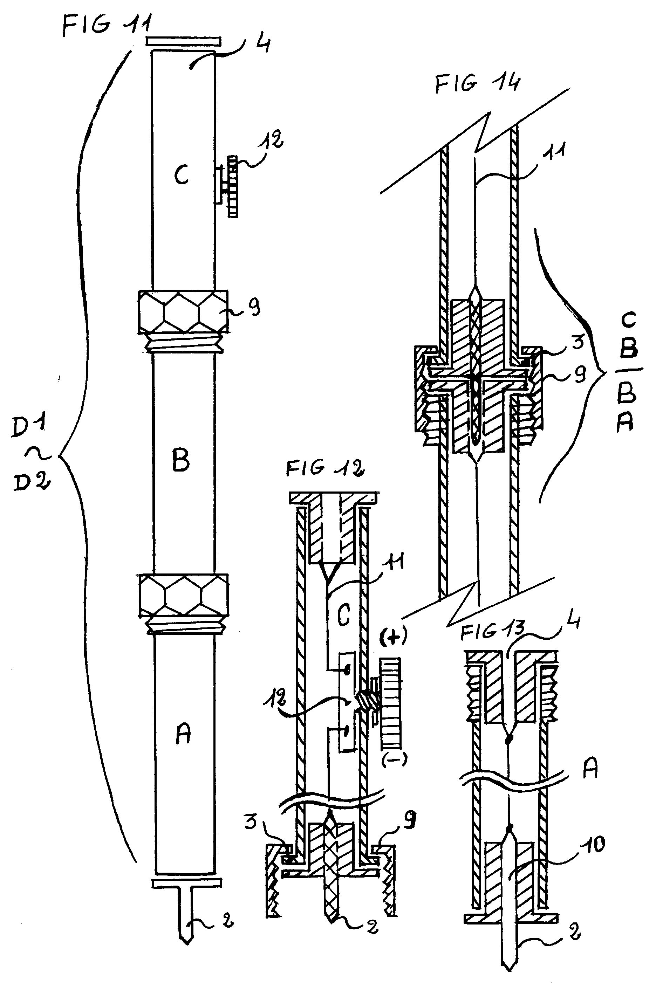

Les figures 8.9.I0.II. représente un exemple de réalisation et de schéma fonctionnel des détecteurs conformément à l'invention . Les figures I2.I3.I4.I5. représente un exemple de variante dans la réalisation des détecteurs conformément à l'invention .

En référence à ces dessins,le dispositif comporte un boitier de commande (I) dont la face arrière (2) est munie d'un orifice correspondant au passage du cable électrique (3), la face du des sus (4) du boitier (I) est muni d'orifices correspondant aux diamêtres et grandeurs des instruments de mesures et de protections . la face du dessus (4 ) du boitier (I) comporte un dispositif de mise sous tension (5) protégée par une protection fusible (6) et signalée par un voyant lumineux (7), La mise sous tension (5) alimente une alimentation stabilisée de 0 à 48v (8). Le pole (+) anode du secondaire alimente un commutateur (9) de mise sous tension à la protection fusible (I0) au voyant lumineux (II) aux régulateurs (I2-I3) au volt-mètre (I4) à l'ampèremètre (I5) au commutateur (I6) alimentant les bornes (I7) de sorties (+) anode . Le pole (-) cathode du secondaire alimente le régulateur (I2) du volt-mètre (I4) au fil de terre (I9) de l'alimentation secteur (3) . Le voyant lumineux (II) le voltmètre (I3) la protection fusible (I8) relient le fil de terre (I9) cathode ; Les poles (+) anodes des fiches de sorties (I7) reçoivent un cordon électrique (20) reliant la surface par l'électrode (2I); Une antenne télescopique (22) sert de témoin de terre par la terre reliée.

En référence à ce dessin , le dispositif comporte le support du boitier de commande (I) en forme de (H) reposant sur un acrotère (I7), la partie reposant sur l'acrotère (I7) est télescopique (2) comprend un serrage rapide (3); les bras (4) longeant les parties verticales de l'acrotère (I9) sont articulés ( I0) et repliés pour le transport. La partie intermédiaire (9) entre la partie basse (7) et la partie haute (8) est munie de bras articulés (I0) de chaque côté du système pour la partie extérieure (I6) de l'acrotère (I7), la partie intérieure (I5) est reliée entre la partie basse (7) et la partie haute (8) par une fixation mobile (9), la partie haute (8) formant caisson (II), la face arrière (I6) à une encoche (I4) pour le passage du cable d' alimentation du boitier de commande , chaque côté (I2) recevra une fixation (I3) maitenant le boitier de commande au caisson(II)

En référence à ces dessins , le dispositif comporte un coffret de réception (I) électro-acoustique , comportant deux entrées (EI) (E2), l'entrée (EI) comporte un commutateur (CI) M/A ,une protection fusible (FI),alimente un vu-mètre à diodes (2) et un galvano-mètre (3), le galvano-mètre (3) est commandé par un commutateur(C2) M/A,ainsi que le vu -mètre (2) relié à l'entrée(E2) par le commutateur (C2) comprend une protection fusible (F2) et un commutateur (C3) M/A relié à l'entrée (E2). Le commutateur (C2 )annule la fonction du galvano-mètre (3),le commutateur (C2) alimente le timbre (4) relié au commutateur (CI) de l'entrée(EI) Le commutateur (C4) peut annuler la fonction du timbre (4). La fonction écoute (5) comporte un commutateur (C5) M/A relié à l'entrée (EI), le contact (C5) est relié à l'amplificateur (6), la fiche casque (5) relie l'amplificateur (6)-(HP) une liaison relie le commutateur (C5) ,l'autre liaison connectée au centre de la fiche (5), l'autre contact (C5) relie la fiche (5). l'amplification (6) comporte un régulateur de volume (7). l'alimentation de l'amplificateur (6) est faite par un accumulateur (8) comportant un commutateur (C6) M/A , l'alimentation du vu -mètre est reliée à cette alimentation.

En référence à ce dessin _{"}le dispositif comporte une liaison spécialisée de mise à la terre (I) munie d'une prise de terre (2) d'un contact (3) conducteur ex: cuivre; un pied téléscopique (4) maintient le contact (3) sur la surface mouillée (7),le blocage des parties (5) du pied téléscopique (4) est réalisé par un serrage rapide (6).

En référence à ce dessin , le dispositif comporte un éloigneur de boitier (I) muni d'une sangle réglable (2),tient l'éloigneur de boitier (I) suspendu autour du cou ; la partie mobile (3) de l'éloigneur de boitier (I) est articulé (4),sert à éloigner le boitier du corps. La partie mobile (3) sera repliée sous l'ensemble (I) , la partie mobile (3) comporte aux extrémités (5) des fixations ex: des pinces (6) pour le pantalon ,stabilisant l'ensemble.

En référence à ces dessins , le dispositif comporte deux détecteurs mobiles (DI)-(D2), les détecteurs sont en tubes creux ex: non limitatif: cuivre, inox , alu ; Les détecteurs (DI)-(D2)ont à leur base un embout mâle (2);La longueur des détecteurs (DI)-(D2) est de I.20M , cette longueur est divisée en trois parties (A)-(B)-(C). La partie supérieure reçoit une fiche femelle (4). Les raccords (5) des parties (A-B) (B-C) ont un évidement (I0) central longitudinal pour le passage du cable électrique (II) . Les parties (A) mâles et les parties (C) femelles sont reliées par un cable électrique (II). Une partie (C) femelle recevra un régulateur (I2) relié au cable électrique (II). il y a un détecteur (DI) avec un régulateur (I2) ,et un détecteur (D2) sans régulateur. Les embouts femelles (4) sont reliés aux entrées du coffret de réception électro acoustique .
En référence à ces dessins , le dispositif est une variante des détecteurs .

La mise en oeuvre et le dispositif selon l'invention est en particulier , particulierement destiné à la détection des infiltrations sur revètement d'étanchéité des bâtiments.

## Revendications

1. Détecteur d'infiltration électro-magnétique et acoustique pour la détection et la localisation des infiltrations en particulier sur revètement d'étanchéité caractérisé en ce qu'il comporte un boitier de commande (FigI-I) muni d'une alimentation stabilisée de O à 48v (8). La sortie du générateur (+)(8) étant reliée aux bornes de sorties (I7) (anodes). La sortie du générateur (-)(8) étant reliée aux organes par la terre (I9)(cathode). Une entenne télescopique (22) sur Le circuit terre sert de testeur de terre. Le dispositif régulé par les instruments de mesures (VI4)-(AI5) permet l'émission d'un flux par l'intermédiaire de l'électrode (21) sur la zone de recherche de l'infiltration sur la terrasse.

2. Détecteur d'infiltration électro-magnétique et acoustique selon la revendication I caractérisé par un dispositif de détecteurs en tube creux ex: cuivre-alu-inox (DI)-(D2)(Fig 8-9-I0-II) dont un est muni d'un régulateur (I2);ayant à leur base un embout mâle, et en partie haute une fiche femelle. Un cable électrique relie l'embout mâle àla fiche femelle. Ces détecteurs sont l'intermédiaire indispensable entre le boitier de commande (FigI-I) et le boitier de réception électro-acoustique(Fig 4-I) ou les (Fig I2-I3-I4-I5) est une variante.

3. Détecteur d'infiltration électro-magnétique et acoustique selon la revendication I ou la revendication 2 caractérisé par un dispositif pour la réception électro-acoustique qui comporte un boitier de réception électro-acoustique (Fig 4-I) d'où les entrées (EI)-(E2) reliées aux détecteurs (DI)-(D2) captant le champ électro-magnétique réparti sur la terrasse . des instruments (4)-(5)-(6) collaborent à la détection par un môde visuel sonore et acoustique.

4. Détecteur d'infiltration électro- magnétique et acoustique selon l'une quelconque des revendications I à 3 caractérisé par un dispositif pour une liaison spécialisée de mise à la terre (Fig 7-I) reliant la prise de terre (2) au contact (3) par l'intermédiaire d'un pied télescopique (4), dans le cas d'une mauvaise conductibilité ahmique ex: ossature bois.

5. Détecteur d'infiltration électro -magnétique et acoustique selon l'une quelconque des revendications I à 4 caractérisé par deux dispositifs de support et de maintient.L'un est un support de boitier de commande (Fig 3) fixé sur un acrotère (I7) maintient solidement le boitier de commande. L'autre est un éloigneur de boitier de réception électro-acoustique (Fig 6-I) facilitant la lecture des instruments de controles (3 G )-( 2 V M D) pendant les recherches .

6. Dispositif selon la revendication I caractérisé en ce que le boitier de commande (I) constitue une partie du dispositif . Le boitier de commande (I) présente un orifice (2) dans lequel est introduit le cable (3) d'alimentation électrique; que le dessus (4) du boitier de commande (IFig 2) comporte les organes de commande (5) de protection (6) de témoins lumineux (7) raccordés au générateur (8); que la sortie du générateur (8)(pole +)(anode) relie le commutateur (9) la protection (I0) le voyant lumineux (II) le régulateur (I2) le volt-mètre (I4) le régulateur (I3) l' ampère-mètre (I5) le commutateur (I6) des bornes (I7)(+)(anodes) que la sortie du générateur (8)(-)( cathode) relie le régulateur (I2) le volt-mètre (I4) le voyant lumineyx (II) la protection (I8) à la prise de terre (I9);que les bornes de sorties (I7)(+) (anodes) relient la surface concernée par un cordon électrique (20) et l'électrode (2I) ; qu'une antenne télescopique (22) sert de témoin de terre.

7. Dispositif selon la revendication 2 caractérisé en ce qu'il comporte deux détecteurs (DI)-(D2)en trois parties (A)-(B)-(C), la partie (A) est pourvue d'un embout mâle (2), la partie (C)d' embout femelle (4),que les parties (A) mâle (2) et les parties (C) femelles (4) sont reliées par un cable électrique (II), que la partie (B) est intermédiaire. Une partie (C) reçoit un régulateur (I2) relié au cable électrique (II);que les raccords (5) ont un évidement (I0) central longitudinal pour le passage du cable électrique(II);qu'il y à un détecteur (DI) avec un régulateur (I2) et un détecteur (D2) sans régulateur. Que les détecteurs (DI)-(D2) sont reliés au boitier de réception (Fig 4-5)I au moyen de cables électriques pourvus de fiches mâles .

8. Dispositif selon la revendication 3 caractérisé en ce que le boitier de réception électro-acoustique(I)comporte deux entrées (EI)-(E2) de réception. L'entrée (EI) est pourvue d'un commutateur (CI) d'une protection (FI) d'un vu-mètre à diodes (2) d'un galvanomètre (3) et d'un commutateur (C2) relié à la protection (F2) et à l'entrée (E2) ; que le commutateur (C2) relie la sonnerie(4) par le commutateur (C4), les commutateurs (C4)-(C2) an nule la fonction sonnerie(4); que la fiche écoute (5) est reliée au commutateur (C5),un autre contact du commutateur (C5) est re lié au réseau (EI) et à l'entrée de l'amplificateur (6),l'autre entrée de l'amplificateur (6) est reliée au réseau (E2),l'autre contact du commutateur (C5) relie une sortie de l'amplificateur (6), l'autre sortie de l'amplificateur (6) relie la fiche d'écoute(5); que l'amplificateur (6) à un régulateur de volume (7) un accumulateur (8) alimente l'amplificateur (6) et le vu-mètre à diodes (2). un commutateur (C6) coupe l'alimentation (8).

9. Dispositif selon l'une quelconque des revendications caractérisé en ce qu'il comporte une liaison spécialisée de mise à la terre, pourvue d'une liaison spéciale (Fig 7-I) reliant la prise de terre (2) au contact (3) pourvu d'un pied télescopique (4) maintenant le contact (3) au support mouillé (7),que le pied télescopique (4) est pourvu de plusieurs parties (5)s'emboitant les unes dans les autres ,bloquées par serrage rapide(6).

10. Dispositif selon la revendication I et la revendication 3 caractérisé en ce que : le support de boitier de commande (I) (Fig 3) maintient le boitier de commande (I) (Fig I-2) sur un acrotère, la partie reposant sur l'acrotère est télescopique(2) (Fig 3) bloqué par un serrage rapide (3), les bras (4) verticaux sont articulés (5);que la jonction entre la partie inférieure (7) et la partie supérieure (8) est mobile et articulée;que la partie intérieure (I5) entre la partie basse (7) et la partie haute (8) est pourvue d'une fixation mobile (9) solidaire; que la partie extérieure (I6) entre la partie basse (7) et la partie haute(8) est pourvue de bras articulés ; que la partie haute (8) est pourvue d'un caisson (II) et présente une encoche (I4) pour le passage d'un cable ; que les côtés (12) comportent des fixations (I3).En ce que l'éloigneur de boitier électro-acoustique (I)(Fig 6) comprend une sangle réglable (2),que la partie mobile (3) articulée (4) est pourvue de fixationx (6) aux extrémités(5)
